# EUROPEAN PATENT SPECIFICATION

(11) **EP 0 609 346 B1**
(45) Date of publication and mention of the grant of the patent: **15.01.1997**
(21) Application number: 92922444.2
(22) Date of filing: 20.10.1992
(51) Int. Cl.: B23K 11/36, B25J 19/00, H01R 35/00

(54) **SWIVEL COUPLING**
GELENKVERBINDUNG
RACCORD ARTICULE

(30) Priority: 21.10.1991 SE 9103051
(43) Date of publication of application: 10.08.1994
(73) Proprietor: ROTECH TOOLING AB, S-400 81 Göteborg (SE)
(72) Inventor: ARONSSON, Joachim, S-430 91 Hönö (SE)
(74) Representative: Kristiansen, Alf P.
(86) International application number: PCT/SE92/00730
(87) International publication number: WO 93/07986

(56) References cited:
- EP-A- 0 424 230
- US-A- 4 438 309
- US-A- 4 507 534

## Description

The present invention relates to a swivel connection which is intended to be included in a robot arm for electric welding, for electric influence of for instance valves and gripping means and for transferring liquid or gaseous use media. It shall be the last link of a robot arm on which a so called spot welding jaw or other means are to be mounted.

### PRIOR ART:

Industrial robots for example for welding, especially spot welding are well known and have been in use for several decades. They are especially used in line production for example for the production of cars and then primarily for welding together car body parts or the like. The robots must in such applications have a certain size and rigidity so that they can put the weld spot on the right place, but at the same time it must be so flexible that they can reach the difficult places. The spot weld itself is obtained by means of a current pulse of alternating or direct current having a high amperage, usually at the order of size of 5.000-30.000 ampere. This means that thick cables have to be drawn to the welding jaw from a transformer which usually is arranged in the vicinity of the base of the robot arm. This thick current cable which hangs outside the robot arm in some way is however a large hindrance for the movements of the robot arm. The robot arm shall swing in different directions and even turn around an axis which means that the cable has to be relatively long so that it can follow the arm in all these movements. Besides the current supply through a thick current cable also cooling water and pressure air for the different operations of the welding jaw has to be supplied which means another collection of pipes and/or flexible hoses.

Similar problems arise even when weaker currents shall be supplied to some other means than a welding jaw. Such arrangements can be electrically influenced valves, gripping means or the like.

Other arrangements than the above mentioned, which are not in need of electrical current, but which only have to be cooled or influenced of a liquid or gaseous medium is also connected with the problems which have been mentioned above relating for example to space for flexible hoses and the like which limits the moving ability of a robot arm.

Examples of industrial robots are disclosed in the European patent application 424 230, US patent 4 438 309 and 4 507 534. These robots are used for, for example, electric welding and they all have long distance from the transformer to the welding spot.

### TECHNICAL PROBLEM:

Even though the above mentioned known robots have been well developed and have functioned well since many years they have, however, the serious limitation that due to the thick cables and hoses the robot arm cannot reach all the places which are desirable. This makes the production more difficult and the articles, for instance car bodies, which are to be welded have with regard to their construction to be adapted to the limitation of the robot. One has therefore since the time when one started using robots for for example spot welding had the desire that one should be able to make the robot arm with additional welding jaw or other means more flexible so that all thinkable welding points or the like could be reached.

Another problem which is connected with the prior art wrists or swivels is that burning damage easily occurs on the contact surfaces.

### THE SOLUTION:

Through the present invention one has been able to meet the above desires and brought about a swivel connection intended to be a part of a robot arm for electrical welding, for electrical influence of for example valves, gripping means etc. or for transferring liquid or gaseous media and which is characterized in that it comprises a rotatable cylindrical hub having an attachment piece at one end for attaching the swivel to a robot arm or the like, a not rotatable coupling sleeve around the hub, a pair of concentric contact rings electrically isolated from each other and from the coupling sleeve around a narrower part thereof and a cover attached to the second end of the hub, around which cover two from each other and from the cover electrically isolated concentric rings are arranged adjacent to the two concentric rings around the coupling sleeve, channels for supply of air and/or liquid having been arranged in the coupling sleeve, the hub and the cover with rings.

According to the invention the channels through the coupling sleeve ends at different axial levels on the cylindrical inner side of the sleeve and communicate with circumferentially running grooves on the cylindrical outer side of the hub, which grooves in their turn are separately connected to axial channels in the hub, which channels in their turn communicate with radial channels in the cover and the concentric rings around this.

According to the invention seals in the shape of O-rings or the like are arranged in grooves between the circumferentially running grooves at the outer side of the hub.

It is further according to the invention suitable that the two concentric rings around the coupling sleeve are kept on these and to each other at some distance from the coupling sleeve and from each other by means of elastic O-rings or the like.

It is further according to the invention suitable that channels are arranged in the coupling sleeve for the supply of pressure medium to the space between this and the around this arranged concentric rings for pressing these rings against corresponding rings around the cover.

According to the invention it is suitable that the attaching piece at one end of the hub consists of a ring having through going bolt holes.

It is further according to the invention advantageous that these bolt holes are connected to threaded radial openings for screwing in locking screws against removable fastening bolts.

The bolts in the bolt holes should according to the invention have a surrounding recess at the area where the locking screws are intended to abut and this recess should consist of a groove having sides, the slope of which against the axis of the bolt is about 45°.

### DESCRIPTION OF THE FIGURES:

The invention will in the following be described more in detail in connection with the attached drawings which describe an embodiment where the swivel connection shall serve and carry a welding jaw and where,
- Fig. 1: shows a swivel connection according to the invention mounted with a transformer,
- Fig. 2: shows the swivel connection with transformer connected with a welding jaw and ready to be mounted at the end of a robot arm,
- Fig. 3: shows partly in section the swivel connection according to the invention seen from one side,
- Fig. 4: shows the swivel connection according to the invention seen from above,
- Fig. 5: shows in section the hub with attached attachment means,
- Fig. 6: shows the hub seen from above,
- Fig. 7: shows the coupling sleeve in section,
- Fig. 8: shows the coupling sleeve seen from above,
- Fig. 9: shows in section the end cover,
- Fig. 10: shows the end cover seen from above
- Fig. 11: shows a pair of the rings and
- Fig. 12: shows the fastening bolts for fastening the swivel arrangement according to the invention to the robot arm.

### PREFERRED EMBODIMENT:

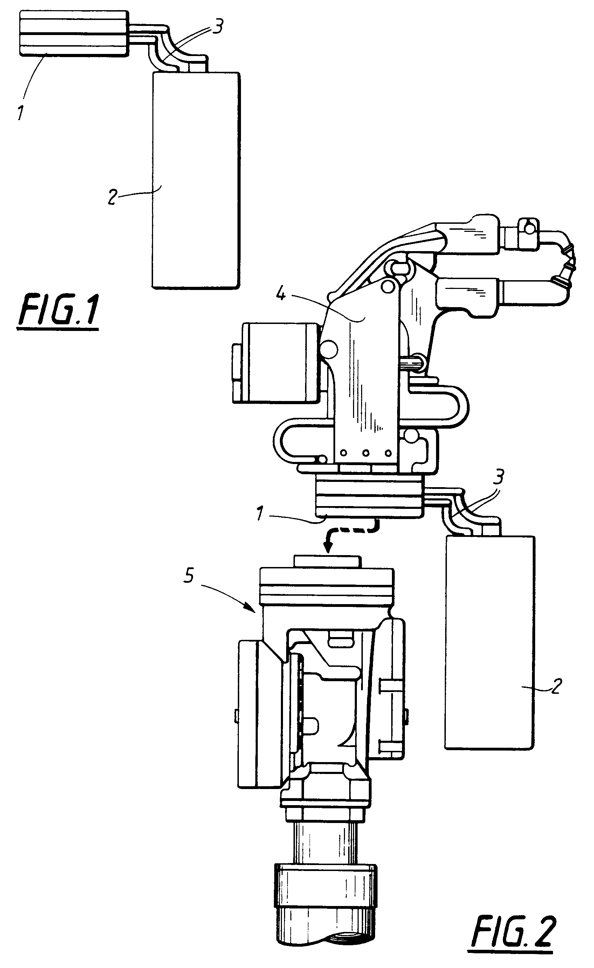

On Fig. 1 a swivel connection 1 according to the invention is shown which swivel connection is connected to a transformer 2 via a blade conductor 3.

Fig. 2 shows the arrangement according to Fig. 1 with attached welding jaw 4. On the figure also an outer end 5 of a robot arm on which the swivel arrangement 1 according to the invention is intended to be attached is shown. The robot arm 5 and the welding jaw 4 are of conventional art and are therefore not described here further. The current supply to the transformer 2, which is carried out by means of high voltage conductors are neither shown as the arrangement of them is simple and of a problem free kind.

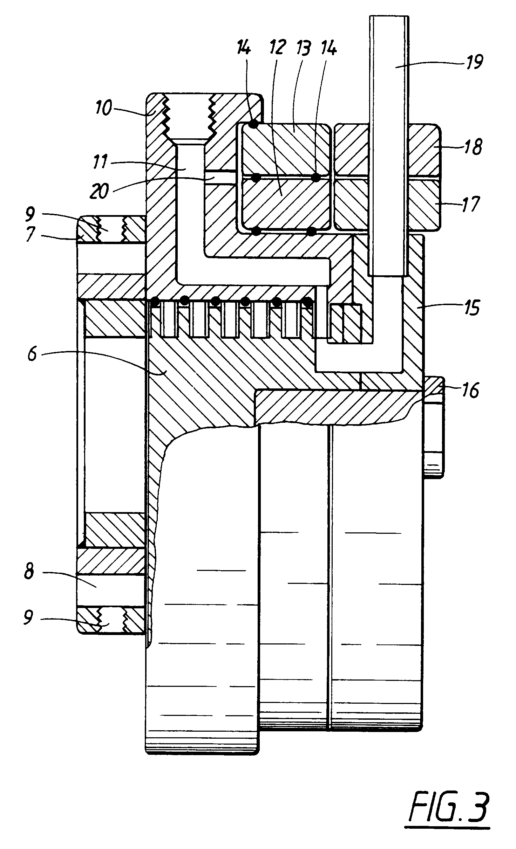

On Fig. 3 the hub 6 is shown partly in section which hub is firmly connected for instance by welding to a fastening ring 7. In this fastening ring 7 a number, suitably 6 bolt holes have been bored for fastening bolts which will be described later. Radial holes 9 for locking screws are bored in the fastening ring 7 close to the bolt holes 8. Around the hub 6 a coupling sleeve 10 with channels 11 for the supply of air or liquid to grooves in the hub 6 is mounted. Around the coupling sleeve 10 on a narrower part thereof two concentric rings 12 and 13 have been arranged. These are isolated from each other and from the coupling sleeve 10 by means of for example O-rings 14.

On Fig. 3 there is further shown a cover 15 which by means of a screw 16 is screwed to the hub 6. On the radial side of the cover two concentric rings 17, 18 have been arranged. These are mounted by means of pipes 19. The rings 17 and 18 are electrically isolated from each other and from the cover 15. As appears from the figure the channel 11 continues from the coupling sleeve via the hub 6 into the cover 15 and further out through the pipes 19. This channel 11 which suitably is present in a number of six is intended to partly conduct the movements of the welding jaw by means of air pressure, partly cool this by means of water.

The rings 12 and 13 as well as 17 and 18 are as said above electrically isolated from each other. These rings which are intended for the supply of current consist suitably of copper and can be covered with some isolating material, however not on that side which faces the corresponding ring with the same size. When current shall be supplied to the welding jaw it is conducted into and out via the rings 12 and 13 which are provided with coupling lugs and is conducted further to the welding jaw via the rings 17 and 18 which also are provided with coupling lugs. To create electric connection between the rings 12, 13 and 17, 18 the rings 12 and 13 are pressed against the rings 17, 18 by means of pressure air which is guided in via for example two diametrically opposite channels 20. The rings 12 and 13 are through the O-rings suspended resiliently and return to the isolating position when the air pressure in the channel 20 ceases. In such a way the current supply is broken at the same time as the air pressure which operates the welding jaw disappears. As it is the air pressure in the welding cylinder of the jaw that moves the welding electrodes against the welding spot and starts to weld then no current transport will arise until the air has been switched on and the rings have been pressed against each other. This prevents that burning damages on the contact surfaces of the current device arises.

Those parts of the swivel connection according to the invention which are coupled to the robot arm namely the hub having the fastening ring 7 and the cover 15 as well as the rings 17 and 18 will be able to turn together with the robot arm whereas the coupling sleeve 10 having the contact rings 12 and 13 will be stationary with regard to turning movements.

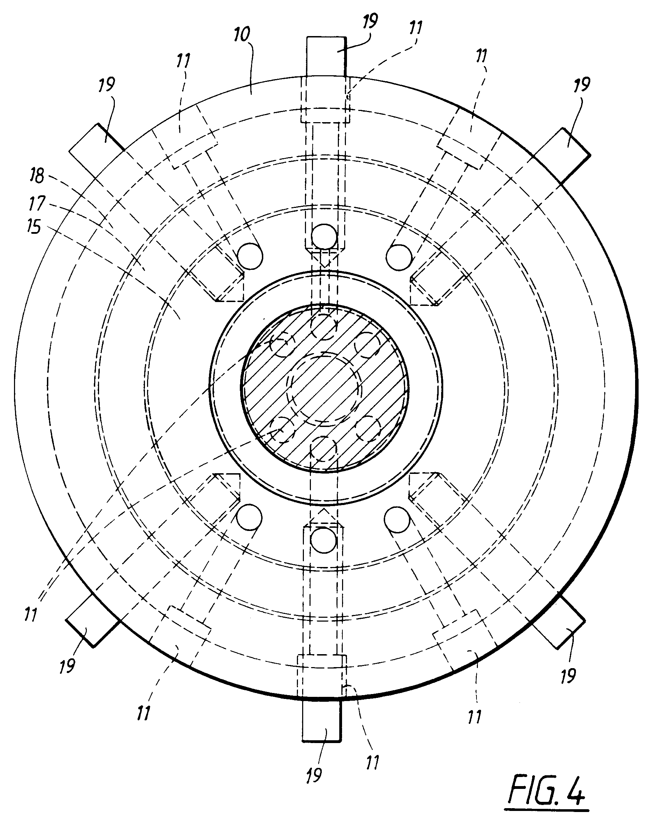

Fig. 4 shows the swivel arrangement seen from above i.e. against the cover. On the drawing it appears that there are six channels 11 and six fastening pipes 19. The outer end of the coupling sleeve 10 and the rings 17 and 18 which are mounted on the cover 15 is shown on the figure. The channels 11 which come up centrally in the hub are indicated.

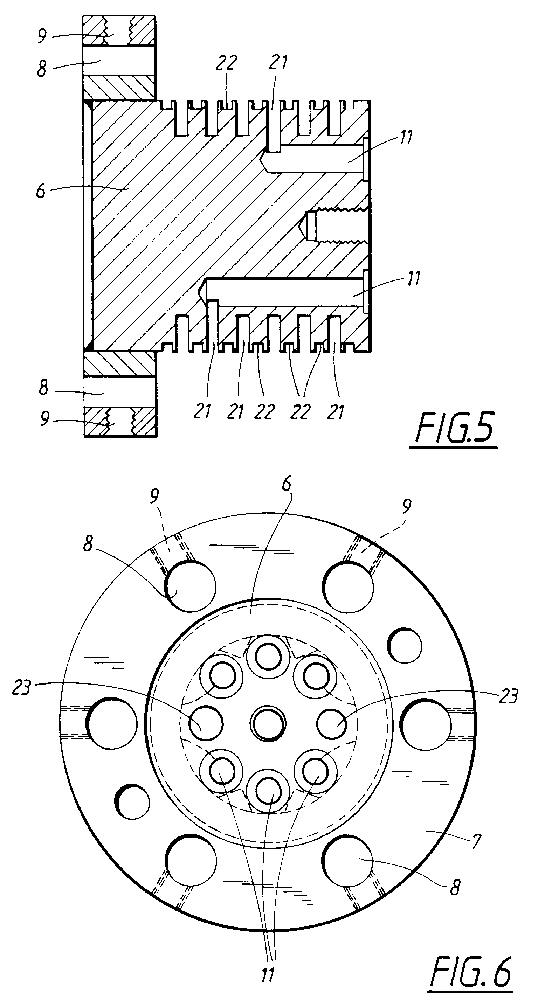

Fig. 5 shows a section through the hub 6. As appears this has on its cylindrical outer side been provided with grooves 21. These grooves are connected to a separate channel 11 in the coupling sleeve 10 and ends in a separate axial channel which makes a continuation of the channel 11 in the coupling sleeve 10. As appears from the figure six grooves are arranged each corresponding to a separate channel 11. Between the grooves 21 smaller grooves 22 have been arranged. These are intended to house O-rings or other seals which will turnably abut against the cylindrical inner side of the coupling sleeve 10 and thus separate each groove 21 and channel 11 from each other.

Fig. 6 shows the hub 6 seen from above. The channels 11 which in this case are six end upwardly close to the centre of the hub. In their real centre a hole is made for screwing in the nut 16 which shall keep the cover in position. The further two bors 23 in the hub are intended for guiding pins.

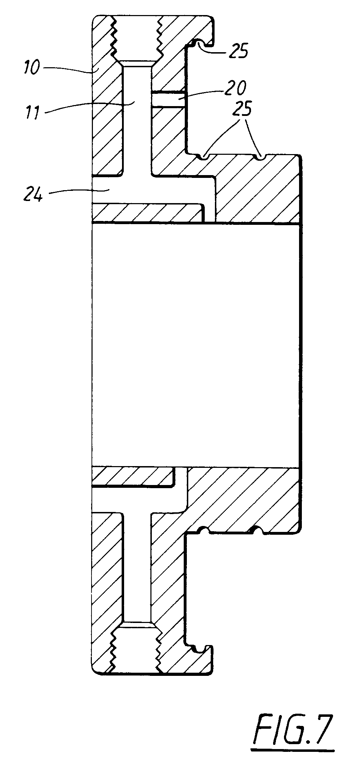

Fig. 7 shows a section through the coupling sleeve 10. In this, channels 11 are made which end in the cylindrical inner surface at different levels on this. The channels 11 have as appears from the figure an opening 24 to one end side, but this opening 24 is plugged after the production. This opening is made for production technical reasons as the axial part of the channel 11 is bored from one side. Grooves 25 for the O-rings which shall keep the contact rings 12 and 13 are made at suitable places.

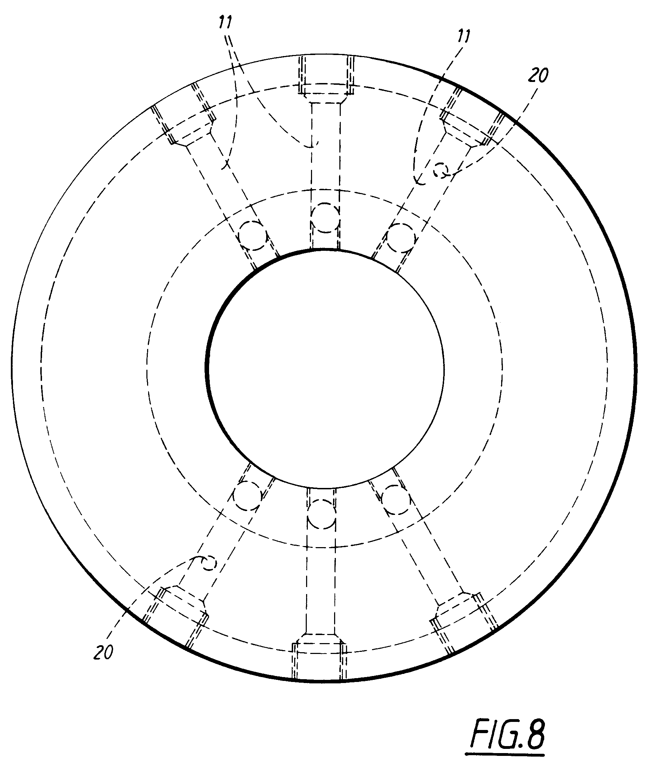

Fig. 8 shows the coupling sleeve 10 seen from above with the channels 11 and two diametrically opposing bores 20 for pressing of the rings 12 and 13 against the rings 17 and 18.

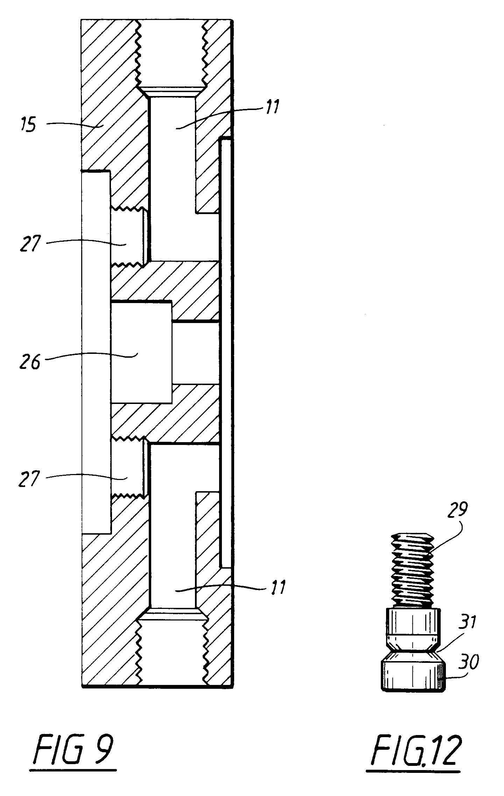

Fig. 9 shows a section through the cover 15. On the figure two channels 11 and a central bore 26 for the screw 16 is shown, which screw shall connect the cover 15 to the hub 6. The openings 27 which go to the channels 11 are normally plugged. If one so desires, these openings can be used for suitable purposes.

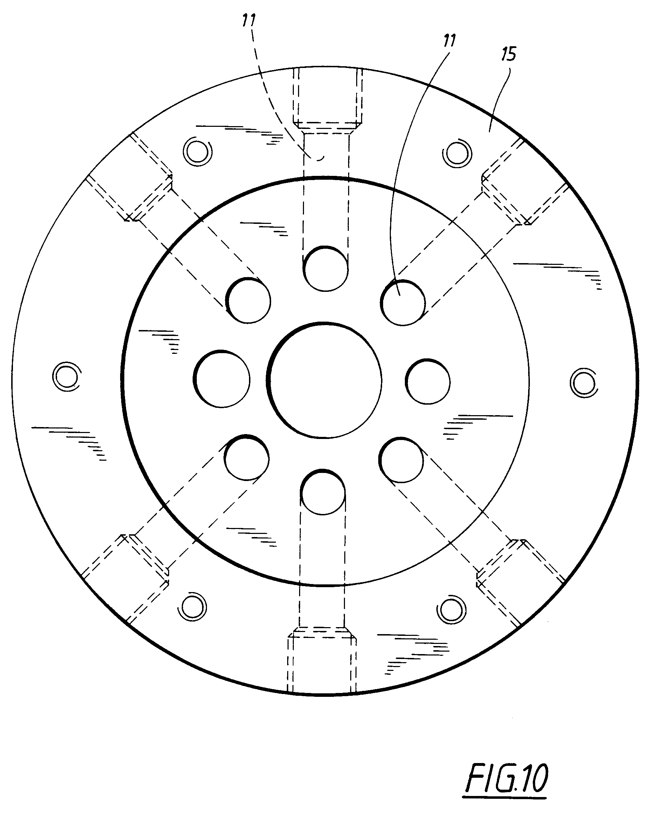

Fig. 10 shows the cover 15 seen from above with the channels 11 and the bore 26.

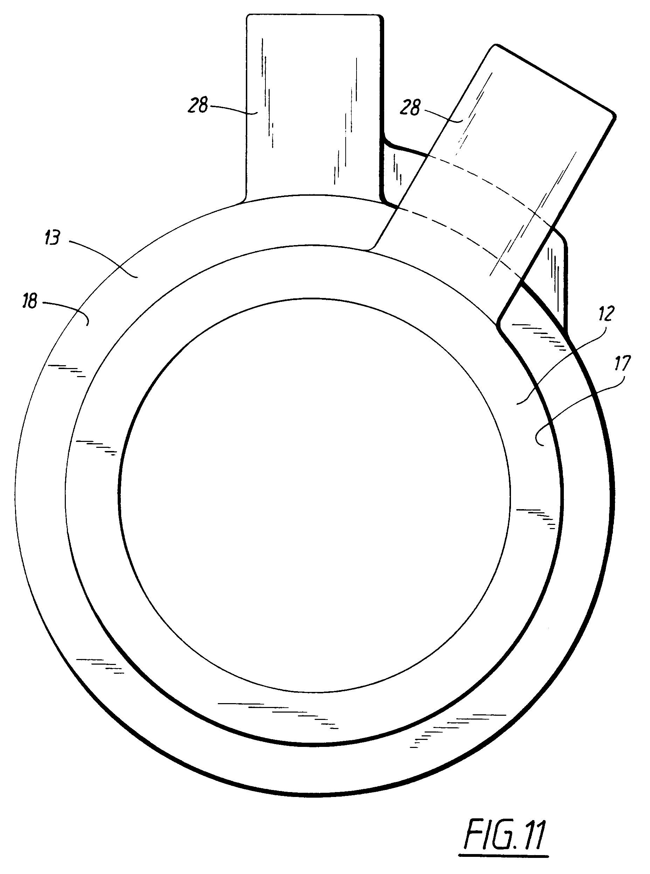

Fig. 11 shows the concentric rings 12 and 13 as well as 17 and 18 seen from above. They have in pairs the same diameters, but the rings 17 and 18 are somewhat broader than the rings 12 and 13. The rings are for the rest similar except for the grooves for the O-rings 14 in the rings 12 and 13, which are shown on Fig. 3. The rings which are electrically isolated from each other are provided with coupling lugs 28 for electric leads.

Fig. 12 shows a fastening bolt for mounting the swivel connection at the end of the robot arm. The bolt consists of a threaded part 29 intended to be screwed into the robot arm and one upper cylindrical part 30 which is intended to be inserted into the bore 8 in the fastening ring 7. A groove 31 has been made at the middle part for receiving locking screws which are put in from the side through the bores 9 in the ring 7. This surrounding groove 31 has sides which form an angle of 45° with the axis of the bolt.

When the swivel connection shall be mounted on the robot arm the fastening bolts are first screwed in the robot arm by means of the threaded part 29 and the swivel connection is put in on the cylindrical part 30 whereupon the locking screws are tightened against the groove 31. One has then located the groove 31 so that when the bolt is completely screwed in and the swivel mounted, the locking screws will when being tightened be pressed against that side of the groove which faces away from the threaded part 29, which means that the fastening ring 7 will be pressed against the end surface of the robot arm.

On the figures channels 11 are shown as being six. Two of these are intended for the cooling water whereas two other channels are intended for pressure air which partly shall squeeze the rings together when welding is going on and partly provide the welding jaw with pressure air for the operation thereof. One of the further channels is intended for pressure air when the welding jaw shall be opened more forcefully and the sixth hole is a spare hole. Which channels that are to be used to what is to be chosen upon.

The swivel coupling has above been described in connection with welding, but it is evident that it can also be used for even other purposes such as controlling valves, gripping means and the like. The only difference which the swivel arrangement then will be subjected to compared with a welding process is that a lower current amperage is passing it. It is also possible to completely shut off the current and use the swivel coupling for the supply of only air or liquid.

The invention is not limited to the embodiment shown, and it can be varied in different ways within the scope of the patent claims. Thus the fastening ring can be replaced by for instance a plate or the fastening piece can simply consist of the bottom of the hub. In the drawings and the description only one pair of concentric contact rings has been shown. It is evident that these rings can be divided into multiple contact rings.

## Claims

1. Swivel connection intended to be a part of a robot arm for electric welding, for electrical influence of for example valves, gripping means etc. or for transferring liquid or gaseous media, comprising a rotatable cylindrical hub (6) having an attachment piece (7) at one end for being attached to a robot arm or the like, a non-rotatable coupling sleeve (10) around the hub (6), a pair of concentric contact rings (12, 13) electrically isolated from each other and from the coupling sleeve (10) around a narrower part thereof and a cover (15) attached to the other end of the hub (6) around which two from each other and from the cover electrically isolated concentric rings (17, 18) are arranged adjacent to the two concentric rings (12, 13) around the coupling sleeve (10), channels (11) for the supply of air and liquid having been arranged in the coupling sleeve (10), the hub (6) and the cover (15) with rings (17, 18).

2. Swivel connection according to claim 1, **characterized in** that the channels (11) through the coupling sleeve (10) ends out at different axial levels on the cylindrical inner side of the sleeve (10) and communicates with the surrounding grooves (21) on the cylindrical outer side of the hub (6), which grooves (21) in their turn are separately connected to axial channels (11) in the hub (6), which channels (11) in their turn communicate with radial channels (11) in the cover (15) and the concentric rings (17, 18) around this.

3. Swivel connection according to claim 2, **characterized in** that seals in the shape of O-rings or the like are arranged in grooves (22) between the surrounding grooves (21) on the outer side of the hub (6).

4. Swivel connection according to any of the claims 1-3, **characterized in** that the two concentric rings (12, 13) around the coupling sleeve (10) is maintained at this and to each other at some distance from the coupling sleeve (10) and from each other by means of elastic O-rings (14) or the like.

5. Swivel connection according to any of the claims 1-4, **characterized in** that channels (20) are arranged in the coupling sleeve (10) for supply of pressure medium to the space between this and the around this arranged concentric rings (12, 13) for pressing these rings (12, 13) against corresponding rings (17, 18) around the cover (15).

6. Swivel connection according to any of the claims 1-5, **characterized in** that the attachment piece (7) at one end of the hub (6) consists of a ring having through going bolt holes (8).

7. Swivel connection according to claim 6, **characterized in** that the bolt holes (8) are connected to threaded radial openings (9) for screwing of locking screws against releasable fastening bolts.

8. Swivel connection according to any of the claims 6-7, **characterized in** that the fastening bolts in the bolt holes have a surrounding recess (31) in the area where the locking screws are intended to abut and that this recess (31) consists of a groove having sides the slope of which against the axis of the bolt is about 45°.

## Patentansprüche

1. Gelenkverbindung, vorgesehen als Teil eines Roboterarms zum elektrischen Schweißen, zur elektrischen Beeinflussung von Musterventilen, einer Einspanneinrichtung usw. oder zum Übertragen flüssiger oder gasförmiger Medien mit einer drehbaren zylindrischen Nabe (6) mit einem Anbringungsteil (7) an einem Ende zur Anbringung an einen Roboterarm oder dergleichen, einer nicht-drehbaren Kupplungshülse (10) um die Nabe (6), einem Paar von konzentrischen Kontaktringen (12, 13), die elektrisch voneinander und von der Kupplungshülse (10) isoliert sind, um einen schmaleren Teil davon und einer an dem anderen Ende der Nabe (6) angebrachten Abdeckung (15), um die zwei voneinander und von der Abdeckung elektrisch isolierte konzentrische Ringe (17, 18) neben den zwei konzentrischen Ringen (12, 13) um die Kupplungshülse (10) angeordnet sind, wobei Kanäle (11) zur Zuführung von Luft und Flüssigkeit in der Kupplungshülse (10), der Nabe (6) und der Abdeckung (15) mit Ringen (17, 18) vorgesehen sind.

2. Gelenkverbindung nach Anspruch 1, dadurch gekennzeichnet, daß die Kanäle (11) durch die Kupplungshülse (10) an verschiedenen axialen Höhen auf der Zylinderinnenseite der Hülse (10) enden und mit den umgebenden Aussparungen (21) auf der Zylinderaußenseite der Nabe (6) kommunizieren, wobei die Aussparungen (21) ihrerseits getrennt mit axialen Kanälen (11) in der Nabe (6) verbunden sind, wobei die Kanäle (11) ihrerseits mit radialen Kanälen (11) in der Abdeckung (15) und den konzentrischen Ringen (17, 18) darum kommunizieren.

3. Gelenkverbindung nach Anspruch 2, dadurch gekennzeichnet, daß Dichtungen in Form von O-Ringen oder dergleichen in Aussparungen (22) zwischen den umgebenden Aussparungen (21) auf der Außenseite der Nabe (6) vorgesehen sind.

4. Gelenkverbindung nach einem der Ansprüche 1 bis 3, dadurch gekennzeichnet, daß die zwei konzentrischen Ringe (12, 13) um die Kupplungshülse (10) unter einem Abstand von der Kupplungshülse (10) und voneinander mittels elastischer O-Ringe (14) oder dergleichen an dieser und gegenseitig gehaltert sind.

5. Gelenkverbindung nach einem der Ansprüche 1 bis 4, dadurch gekennzeichnet, daß Kanäle (20) in der Kupplungshülse (10) zur zuführung eines Druckmediums in den Raum zwischen dieser und den um diese angeordneten konzentrischen Ringen (12, 13) zum Drücken dieser Ringe (12, 13) gegen entsprechende Ringe (17, 18) um die Abdeckung (15) vorgesehen sind.

6. Gelenkverbindung nach einem der Ansprüche 1 bis 5, dadurch gekennzeichnet, daß das Anbringungsteil (7) an einem Ende der Nabe (6) aus einem Ring mit durchlaufenden Bolzenbohrungen (8) besteht.

7. Gelenkverbindung nach Anspruch 6, dadurch gekennzeichnet, daß die Bolzenbohrungen (8) mit mit einem Gewinde Versehenden radialen Öffnungen (9) zum Einschrauben von Befestigungsschrauben gegen lösbare Befestigungsbolzen verbunden sind.

8. Gelenkverbindung nach einem der Ansprüche 6 bis 7, dadurch gekennzeichnet, daß die Befestigungsbolzen in den Bolzenbohrungen eine umlaufende Ausnehmung (31) in dem Bereich, wo die Befestigungsschrauben anliegen sollen, aufweisen und daß diese Ausnehmung (31) aus einer Nut mit Seiten, deren Anschrägung gegen die Achse des Bolzens etwa 45° beträgt, besteht.

## Revendications

1. Raccord pivotant destiné à faire partie d'un bras de robot destiné au soudage électrique, à une action électrique par exemple sur des soupapes, des dispositifs de serrage, etc. ou au transfert de fluides liquides ou gazeux, comprenant un moyeu cylindrique rotatif (6) possédant une pièce de fixation (7) à une première extrémité, destinée à être fixée à un bras de robot ou analogue, un manchon non rotatif d'accouplement (10) placé autour du moyeu (6), une paire d'anneaux concentriques de contact (12, 13) isolés électriquement l'un de l'autre et du manchon d'accouplement (10) autour d'une partie rétrécie, et un couvercle (15) fixé à l'autre extrémité du moyeu (6) et autour duquel deux anneaux concentriques (17, 18) isolés électriquement l'un de l'autre et par rapport au couvercle sont disposés près des deux anneaux concentriques (12, 13) placés autour du manchon d'accouplement (10), des canaux (11) de transmission d'air et d'un liquide étant disposés dans le manchon d'accouplement (10), le moyeu (6) et le couvercle (15) à avec les anneaux (17, 18).

2. Raccord pivotant selon la revendication 1, caractérisé en ce que les canaux (11) formés dans le manchon d'accouplement (10) se terminent à des niveaux axiaux différents à la face interne cylindrique du manchon (10) et communiquent avec les gorges périphériques (21) de la paroi cylindrique externe du moyeu (6), ces gorges (21) étant à leur tour raccordées séparément à des canaux axiaux (11) formés dans le moyeu (6), ces canaux (11) communiquant à leur tour avec des canaux radiaux (11) formés dans le couvercle (15) et les anneaux concentriques (17, 18) qui les entourent.

3. Raccord pivotant selon la revendication 2, caractérisé en ce que les joints d'étanchéité sous forme de joints toriques ou analogues sont placés dans des gorges (22) disposées entre les gorges périphériques (21) à la face externe du moyeu (6).

4. Raccord pivotant selon l'une quelconque des revendications 1 à 3, caractérisé en ce que les deux anneaux concentriques (12, 13) placés autour du manchon d'accouplement (10) sont maintenus au niveau de ce manchon et l'un par rapport à l'autre à une certaine distance du manchon d'accouplement (10) et l'un de l'autre par des joints toriques élastiques (14) ou analogue.

5. Raccord pivotant selon l'une quelconque des revendications 1 à 4, caractérisé en ce que des canaux (20) sont formés dans le manchon d'accouplement (10) afin qu'ils transmettent un fluide sous pression vers l'espace compris entre ce manchon et les anneaux concentriques (12, 13) disposés autour de lui de manière que ces anneaux (12, 13) soient repoussés contre les anneaux correspondants (17, 18) placés autour du couvercle (15).

6. Raccord pivotant selon l'une quelconque des revendications 1 à 5, caractérisé en ce que la pièce (7) de fixation placée à une première extrémité du moyeu (6) est formée d'un anneau ayant des trous (8) de passage de boulons.

7. Raccord pivotant selon la revendication 6, caractérisé en ce que les trous (8) de passage de boulons sont raccordés à des ouvertures radiales taraudées (9) destinées au vissage de vis de blocage contre les boulons de fixation temporaire.

8. Raccord pivotant selon l'une quelconque des revendications 6 et 7, caractérisé en ce que les boulons de fixation placés dans les trous de boulons ont une cavité périphérique (31) dans la région dans laquelle les vis de blocage sont destinées à être en butée, et la cavité (31) est formée d'une gorge ayant des côtés qui sont inclinés d'un angle d'environ 45° par rapport à l'axe du boulon.
